Europäisches Patentamt

European Patent Office

Office européen des brevets

(11) Publication number: **0 028 274**

A1

(12) **EUROPEAN PATENT APPLICATION**

(21) Application number: **79302343.3**

(22) Date of filing: **26.10.79**

(51) Int. Cl.³: **G 01 N 33/48**
**B 01 L 3/02**

(43) Date of publication of application:
**13.05.81** Bulletin **81/19**

(84) Designated Contracting States:
**CH DE FR GB IT NL**

(71) Applicant: **Starplex Inc.**
**4500 Dixie Road Unit 12**
**Mississauga Ontario, L4W 1V7(CA)**

(72) Inventor: **Mull, John Douglas**
**1905 Fieldgate Drive**
**Burlington Ontario, L7P 3H4(CA)**

(74) Representative: **Hallam, Arnold Vincent et al,**
**E.N. LEWIS & TAYLOR 144 New Walk**
**Leicester LE1 7JA(GB)**

(54) Method of and device for introducing a liquid into a measuring tube.

(57) The disclosure relates to a method of introducing a liquid into a measuring tube and to a device for use in the method. In the specific embodiment the method is used in determining the erythrocyte sedimentation rate of a blood sample. This involves the steps of providing a device (10) comprising a transparent tube (12) and a cap (14) fitted in airtight fashion to a first end portion of the tube and having a skirt (22) which makes airtight sealing engagement with the tube (12). The cap (14) is slidable along the tube from a first position to a second position closer to the first end (16) of the tube, (12) while still maintaining airtight sealing engagement. A second end portion of the tube is immersed in a blood sample (26) and the cap (14) is slid along the tube towards its said second position to draw a column of blood into the tube (12). The tube (12) is then removed from the sample (26) and the device (10) is maintained in an upright position for a predetermined length of time. At the end of that time, the extent to which erythrocytes in the blood have settled is determined and provides an indication of the erythrocyte sedimentation rate of the blood sample.

FIG.2

METHOD OF AND DEVICE FOR INTRODUCING A LIQUID INTO A
MEASURING TUBE

This invention relates generally to a method of
introducing a liquid into a tube and to a device for use in
the method.  More particularly the invention has been devised
in connection with a method of determining the erythrocyte
sedimentation rate of a blood sample.

In the diagnosis of blood disorders, the rate at
which erythrocytes (red corpuscles) settle out of a blood
sample is commonly used as a primary indicator of whether or
not the sample is normal.  The sample is placed in a calibrated
measuring tube and allowed to stand for a predetermined
lenth of time, after which note is taken of the extent to
which the erythrocytes have settled out.  In a blood sample
containing, say, hepatitus virus, the erythrocytes will settle
to a significantly greater extent than in the case of a normal
blood sample.

Techniques previously used for introducing a blood
sample into a measuring tube have had significant shortcomings.
For example, in one case, the blood is aspirated into the tube
by mouth; however, this has the risk that the technician performing the technique is exposed to possible contamination by
viruses and the like in the blood.  Mechanical aspirator
devices used to avoid this problem are often difficult to
manipulate and do not allow blood to be raised in a steady
and controlled fashion, with the result that spillage and
contamination of blood samples often occurs.

For example, United States Patent No. 3,373,601
(Monn) discloses a device comprising a container for a blood
sample and a calibrated tube which can be inserted into and
slid axially of the container.  The container has an annular
lip which seals against the wall of the tube so that, when
the tube is pushed into the container it acts in the manner
of a piston, forcing the blood up into the tube.  The problem
with this device is that, unless extreme care is taken to
slowly and carefully push the tube into the container, the
tube will be displaced too quickly and the blood will rise
rapidly in the tube and squirt out of its open upper end.
This is not only highly inconvenient and unhygienic, but is also potentially dangerous since the blood sample may be contaminated.

Broadly considered, an object of the present invention is to provide an improved method of introducing a liquid into a tube. A more particular object is to provide an improved method of determining the erythrocyte sedimentation rate of a blood sample.

According to a first aspect of the invention, there is provided a method of introducing a liquid into a tube. The method involves a first step of providing a device comprising: an elongate transparent tube which is open at both ends and a cap fitted to a first end portion of the tube. The cap has a closed top and a skirt which depends from said top and which makes airtight sealing engagement with the tube. The cap is slidable along the tube from a first position to a second position closer to the first end of the tube than the first position while maintaining said airtight sealing engagement. The next steps are to arrange the cap at its said first position and immerse a second end portion of the tube in a liquid. While maintaining the second end of the tube immersed in the liquid, the cap is then slid along the tube towards its said second position to an extent sufficient to cause liquid to be drawn up the tube to the level of an appropriate one of the graduations. The tube is then removed from the liquid. The lumen of the tube is dimensioned so that the column of liquid is retained in the tube.

According to another aspect of the invention, there is provided a method of determining the erythrocyte sedimentation rate of a blood sample. The method involves a first step of providing a device comprising: an elongate transparent tube which is open at both ends and a cap fitted to a first end portion of the tube. The cap has a closed top and a skirt which depends from said top and which makes airtight sealing engagement with the tube. The cap is slidable along the tube from a first position to a second position closer to the first end of the tube than the first position while maintaining said airtight sealing engagement. The next steps are to arrange the cap at its said first position and immerse a second end portion of the tube in the blood sample. While maintaining the second end of the tube immersed in the blood sample, the cap is then slid along the tube towards its said second position to an extent sufficient to cause blood to be drawn up the tube to an appropriate level. The tube is then removed from the blood sample and maintained in an upright position with the first end portion of the tube uppermost for a predetermined length of time. The lumen of the tube is dimensioned so that the column of blood is retained in the tube. After the predetermined length of time, the extent to which erythrocytes in the blood have settled is determined and provides an indication of the erythrocyte sedimentation rate of the blood sample.

The invention also provides a device for use in performing the method.

In order that the invention may be more clearly understood, reference will now be made to the accompanying drawings which illustrate one embodiment of the invention, by way of example, and in which:

Fig. 1 is a perspective view of the device according to the invention immersed in a blood sample;

Fig. 2 is a view similar to Fig. 1 and illustrates the manner in which a column of blood is raised in the device;

Fig. 3 is a perspective view showing the device supported in a rack during sedimentation of erythrocytes in the blood sample; and,

Fig. 4 is an exploded longitudinal sectional view through the device.

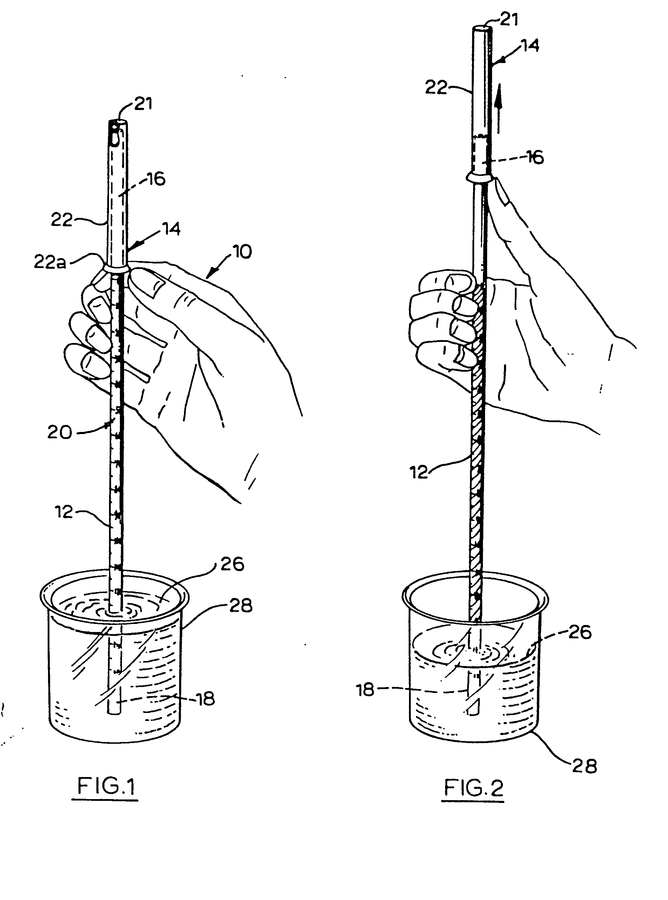

Referring first to Figs. 1 and 2, a device for use in determining the erythrocyte sedimentation rate of a blood sample is indicated generally by reference numeral 10. Device 10 includes an elongate transparent tube 12 and a cap 14. Tube 12 is open at first and second ends 16 and 18 respectively and is marked with a series of graduations which extend longitudinally of the tube 12 and which are generally denoted 20. In this embodiment the graduations are in millimeters and tube 12 is made of plastic.

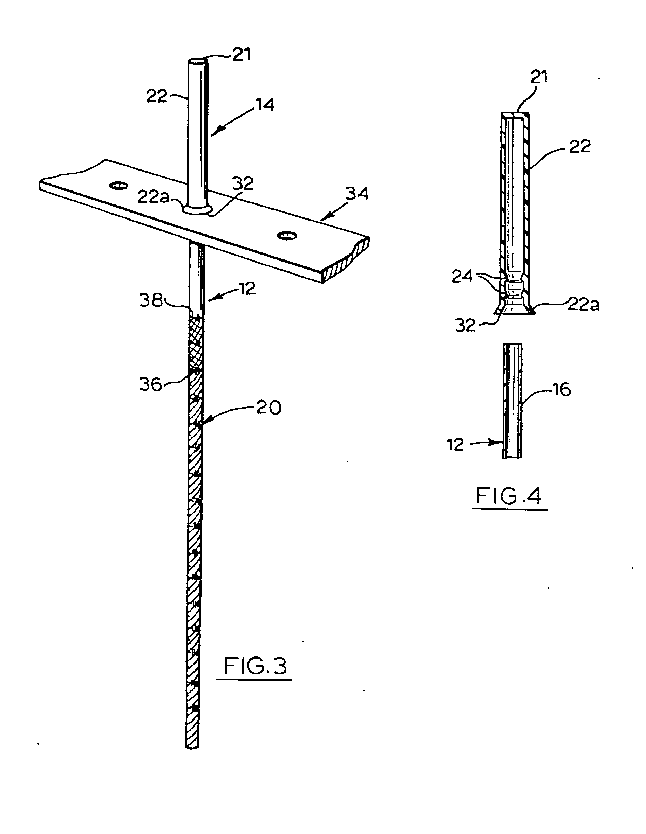

Cap 14 is a one-piece plastic moulding and is fitted in airtiight fashion to the first end portion of the tube 12. The cap includes a closed top 21 and a depending generally cylindriical skirt 22 which makes airtight sealing engagement with thee external surface of the tube 12. As can best be seen in Fig. 4, skirt 22 is formed with two internal sealing ribs 24 of annular form which engage the external surface of tube 12 and which actually provide the seal between the cap and the tube. Ribs 24 are generally wedge-shaped in cross-section and taper towards top 21 of the cap. The ribs permit cap 14 to be slid longitudinally along the tube 12 while maintaining said airtight sealing engagement. Cap 14 is slidable along the tube from a first position to a second position closer to the first end 16 of tube 12. The cap is shown in typical first and second positions in Figs. 1 and 2 respectively.

When the device is to be used to determine the erythrocyte sedimentation rate of a blood sample, cap 14 is initially positioned at a suitable first position such as that shown in Fig. 1. The lower (second) end portion of the tube is then immersed in a blood sample as shown in that view. The sample is indicated at 26 and is contained in a laboratory flask denoted 28. While the lower (second) end portion of the tube is maintained immersed in the blood sample, cap 14 is slid along tube 12 towards its upper (first) end. This causes a column of blood to be drawn up into tube 12. Cap 14 is moved along tube 12 to an extent sufficient to draw the column of blood up to the level of an appropriate one of the graduations. In Fig. 2, the blood level is indicated at 30 and is at the level of the "0" graduation 20. However, it will be appreciated that any appropriate graduation may be selected. It will also be realized that the specific locations of the cap 14 in its said "first" and "second" positions are not critical. It is merely necessary that the extent to which the cap is moved be sufficient to draw a column of blood into tube 12 and up to the level of an appropriate one of the graduations.

It will be seen from the drawings that the skirt 22 of cap 14 is outwardly flared in the region of its open end just below the ribs 24 as indicated at 22a, and terminates in a shoulder 32. This shoulder allows a person using the device to grasp the tube 20 between the fingers and palm of one hand and push the cap upwardly on the tube using the thumb of the same hand. This makes for convenient one-handed operation of the device.

After the column of blood has been drawn into the tube 12 of the device as described, the tube is removed from the blood sample and the device is maintained in an upright position with its first end 16 uppermost, for a predetermined length of time. It will of course be appreciated that the lumen of the tube 12 is dimensioned to ensure that the blood is retained in and does not escape from the tube at this time. In Fig. 3, part of a suitable supporting rack for the device is shown at 34. It will be seen that the rack includes a series of openings through one of which the tube 12 is inserted and which is dimensioned so that the device is supported by abutment of the shoulder 32 of cap 14 against the rack.

After the expiry of a predetermined length of time, the extent to which erythrocytes in the blood in tube 12 have settled is determined by reference to the graduations 20. For example, in Fig. 3, the level of the erythrocytes is indicated at 36 and the level of the sample as a whole at 38; the difference in levels is represented by clear blood plasma. Thus, in the present case, it will be seen that the erythrocyte level has dropped by 20 millimeters in the said predetermined length of time. On the basis of this figure, the erythrocyte sedimentation rate of the blood sample can be calculated and a determination made as to whether or not the sample is abnormal.

In some cases, it may be desirable to dilute the blood sample using a sodium citrate solution before determining the sedimentation rate of the sample. The sodium citrate solution acts as an anti coagulent in the sample. Where this is to be done, the device provided by the invention may also be used to introduce the sodium citrate solution into the sample. Thus, by immersing the lower end of the tube of the device in a body of sodium citrate solution in a container and sliding the cap upwardly as described above, a predetermined volume of solution can be drawn into the tube and subsequently discharged into the blood sample by depressing the cap and thereby ejecting the blood sample from the lower end of the tube.

It will of course be appreciated that the preceding description relates to a specific embodiment of the invention and that the invention is not limited to the particular form of the invention described with reference to the drawings. Thus, the invention may be used for introducing any appropriate' liquids other than blood samples into measuring tubes and for transferring those liquids to other vessels as required. Examples of detail changes are that, although a plastic tube has been described, the tube could of course be made of glass. The graduations on the tube could be differently arranged and need not be numerically identified. Also, variations in the form of the cap are possible.

CLAIMS

1.      A method of introducing a liquid into a measuring tube, characterized by the following steps in sequence:

providing a device (10) comprising:  an elongate transparent tube (12) which is open at both ends and a cap (14) fitted to a first end portion (16) of the tube (12) and having a closed top (21) and a skirt (22) which depends from said top (21) and makes airtight sealing engagement with the tube, (12) the cap (14) being slidable along the tube (12) from a first position to a second position closer to the first end (16) of the tube than said first position while maintaining said airtight sealing engagement;

arranging the cap (14) at its first said position;

immersing a second end portion (18) of the tube (12) in the liquid (26);

while maintaining said second end portion (18) of the tube (12) immersed in the liquid, (26) sliding the cap along the tube towards its said second position to an extent sufficient to cause a column of said liquid to be drawn up the tube (12); and,

removing the tube (12) from the liquid (26);

the lumen of the tube being dimensioned so that the column of liquid is retained in the tube.

2.      A method of determining the erythrocyte sedimentation rate of a blood sample, characterized by the following steps in sequence:

providing a device (10) comprising:  an elongate transparent tube (12) which is open at both ends and a cap (14) fitted to a first end portion (16) of the tube (12) and having a closed top (21) and a skirt (22) which depends from said top (21) and makes airtight sealing engagement with the tube (12), the cap (14) being slidable along the tube (12) from a first position to a second position closer to the first end (16) of the tube (12) than said first position while maintaining said airtight sealing engagement;

arranging the cap (14) at its first said position;

immersing a second end portion (18) of the tube (12) in the blood sample (26);

while maintaining said second end portion of the tube (12) immersed in the blood sample (26), sliding the cap (14) along the tube (12) towards its said second position to an extent sufficient to cause blood to be drawn up the tube (12) to an appropriate level;

removing the tube (12) from the blood sample (26);

maintaining the tube (12) in an upright position with the first end portion (16) of the tube (12) uppermost for a predetermined length of time; the lumen of the tube (12) being dimensioned so that the column of blood is retained in the tube (12); and,

after said predetermined length of time, determining the extent to which erythrocytes in the blood have settled as an indication of the erythrocyte sedimentation rate of the blood sample.

3.      A method as claimed in claim 1 or 2 characterised in that the step of sliding the cap (14) along the tube (12) towards its said second position is affected by grasping the tube (12) using the fingers of one hand and sliding the cap (14) upwardly along the tube (12) using the thumb of the same hand.

4.      A device for use in introducing a liquid into a measuring tube, the device, characterised by:

an elongate transparent tube (12) which is open at both ends and which is marked with a series of graduations (20) extending longitudinally along the tube (12); and,

a cap (14) fitted in airtight fashion to a first end portion (16) of the tube (12) and having a closed top (21) and a skirt (22) which depends from said top (21) and which makes airtight sealing engagement with the tube (12), the cap (14) being slidable along the tube (12) from a first position to a second position closer to the first end (16) of the tube (12) while maintaining the airtight sealing engagement so that, when the second end (18) of the tube (12) is immersed in the liquid (26), movement of the cap (14) slidably from the first to the second position will draw a column of liquid into the tube (12); the lumen of the tube being dimensioned so that said column of liquid is retained in the tube when the second end (18) of the tube (12) is removed from the liquid.

5. A device as claimed in claim 4, characterised in that the cap (14) includes a series of integrally formed annular sealing ribs (24) which extend around said skirt (22) and which make airtight sealing engagement with the external surface of the tube (12).

6. A device as claimed in claim 4 or 5, characterised in that the skirt (22) of the cap (14) is outwardly flared (22a) towards its open end and terminates in a shoulder (32) by which the cap can be displaced along the tube.

7. A device as claimed in claim 4, 5 or 6 characterised in that the cap (14) is in the form of a one-piece plastic moulding.

FIG.1

FIG.2

21
22
14
32
22a
34
12
38
36
20

FIG.3

21
22
24
22a
32
16
12

FIG.4

European Patent
Office

**EUROPEAN SEARCH REPORT**

Application number

EP 79302343.3

| Category | Citation of document with indication, where appropriate, of relevant passages | Relevant to claim |
|---|---|---|
| X | DE - A - 2 326 136 (WELLER) <br> + Totality + <br> -- | 1-5,7 |
| | DE - A - 2 211 098 (KREFT) <br> + Fig. 2 + <br> -- | 1,4 |
| | FR - A - 2 066 209 (DEBEDJIAN) <br> + Fig. 1 + <br> -- | 1,4 |
| | DE - A - 2 155 239 (KREFT) <br> + Fig. 1 + <br> -- | 1,4 |
| | GB - A - 680 383 (FLAIG & SONS) <br> + Fig. 1,2 + <br> ---- | 1,4 |

## DOCUMENTS CONSIDERED TO BE RELEVANT

CLASSIFICATION OF THE
APPLICATION (Int. Cl. 3)

G 01 N 33/48
B 01 L 3/02

TECHNICAL FIELDS
SEARCHED (Int.Cl. 3)

B 01 L
G 01 N

CATEGORY OF
CITED DOCUMENTS

X: particularly relevant
A: technological background
O: non-written disclosure
P: intermediate document
T: theory or principle underlying
  the invention
E: conflicting application
D: document cited in the
  application
L: citation for other reasons

&: member of the same patent
  family,
  corresponding document

X The present search report has been drawn up for all claims

| Place of search | Date of completion of the search | Examiner |
|---|---|---|
| VIENNA | 16-05-1980 | SCHNASS |

EPO Form 1503.1 06.78